# EUROPEAN PATENT APPLICATION

(11) **EP 1 475 947 A1**
(43) Date of publication of application: **10.11.2004**
(21) Application number: 03076426.0
(22) Date of filing: 07.05.2003
(51) Int. Cl.: H04M 15/00, H04M 17/00

(54) **Online charging in a communications network**

(71) Applicant: Nortel Networks Limited, St. Laurent, Quebec H4S 2A9 (CA)
(72) Inventor: Watson, Mark, London, W12 9PR (GB); Richards, Christopher, Dallas, TX 75206 (US); Ricagni, Giuseppe, 20010 Cornaredo (Milano) (IT); MacLean, Ian, Dallas, TX 75214 (US)
(74) Representative: Anderson, Angela

(57) **Abstract**

A communications network in which service flows between an end user and the network are transported via a gateway (8) which identifies different service flows and notifies them to a credit control function (12) of the network. The credit control function grants a cache representing an amount of and end user's credit and/or an amount of network resource to the gateway for the identified service flows and provides instructions to the gateway for the identified service flows which enable the gateway to share units of the caches between service flows, for example if there is a threat of a service flow becoming blocked due to a lack of credit in an end user's account.

## Description

### FIELD OF THE INVENTION

This invention relates to the charging of end users for the use of communications networks.

### BACKGROUND OF THE INVENTION

End users of an Internet Protocol (IP) network, such as a private or public internet or intranet may communicate with the IP network via an access network. The end user uses an end user equipment such as a mobile or stationary telephone or computing device connected to the access network in order to send and receive communications over the IP network. The IP network may be made up of several sub-networks interfaced with each other.

The access network may be a packet switched network, such as a General Packet Radio Service (GPRS) network as defined by the Third Generation Partnership Project (3GPP). The IP network and the access network are generally interfaced by a gateway node of the access network. Where the access network is a GPRS network the gateway node will typically be a Gateway GPRS Support Node (GGSN). The gateway node transports data packets between the access network and the IP network. For charging purposes the gateway node, or a network entity associated with the gateway node, identifies packet streams or service flows between an end user connected to the access network and the IP network. Each packet stream or service flow is a flow of data transported between the access network and the IP network via the gateway node and associated with a particular application, service or group of applications and services, such as browsing on a particular site of the IP network or a VoIP (Voice over IP) or multimedia call carried over the IP network.

To facilitate real-time pre-paid charging of the end user, the gateway node requests charging vouchers from a credit control function of the network, for example a Service Control Point (SCP) or Online Charging System (OCS), for each service flow it carries. These charging vouchers or tokens granted by the OCS represent a right of the end user to send and/or receive a set volume of data over a certain service flow carried by the gateway node and or to send and/or receive data over a certain service flow carried by the gateway node for a set time period. When the end user requests resources for a new service flow from the gateway node, the gateway node requests a voucher for that service flow from the OCS. Before the OCS grants a voucher it checks that the end user's account has a credit level equal to or above the value of the voucher. When the OCS grants the voucher it either reduces the end user's account credit level by the relevant amount or it reserves the relevant amount of credit so that other applications cannot use that reserved amount.

In prior art systems the gateway node must obtain a charging voucher for each service flow it carries. When the voucher is granted the gateway node, for example the GGSN, consumes the voucher, for example by counting the number of bytes carried in the relevant service flow and deducting a corresponding amount from the voucher. In addition or alternatively, the voucher may expire after a predetermined time period. When the voucher is used up or expires, the gateway node must obtain a further voucher from the OCS or have the voucher re-authorized by the OCS. If the end user does not consume all of the voucher by the termination of the service flow, the voucher is returned to the OCS and the OCS credits the end user's account by the appropriate amount or releases the un-used amount from the credit reserved.

The above online charging arrangement, as applied to a GPRS access network allows usage charges to be deducted from end user's accounts in real time. These usage charges are generally based on the amount of data (in bytes) that are sent and/or received by the end user. The data sent and/or received is counted by the GGSN; the gateway node. The charging policies and the end user's account are controlled by the SCP/OCS; the credit control function. By granting vouchers on a per service flow basis, different service flows can be charged at different rates in accordance with the policy of the network operator. Also, by granting vouchers on a per service flow basis, special rates for certain data flows may be applied for a predetermined time or a predetermined volume of data (after which a further voucher at a different rate will be granted).

As end user equipments become more complex, the number of service flows typically operating simultaneously is likely to increase. The different service flows may relate to communication services such as, browsing sessions, E-mails, messaging, VolP or multimedia calls, file transfers or system backups. Where several flows are on-going simultaneously, the gateway node has to obtain several vouchers, ie. one for each service flow. It is possible that an end user's account can become empty or completely reserved as a result of several vouchers being granted, especially where the vouchers are large. In addition, it may not be straightforward for the gateway to determine when a service flow is terminated. For example, data transfer may stop for some period, whilst the user reads a web page, and then resumes. As a result vouchers may remain granted for some time after the user has finished using a service flow and this contributes to increasing the number of vouchers granted at any one time. When the end user's account becomes empty in this situation, the next new service flow for which a voucher is requested or the next existing service flow for which a new voucher or a re-authorized voucher is requested will have this request denied. This may be despite the end user having a significant amount of credit still existing but allocated to or reserved for other vouchers. This will result in the service flow, for which a voucher is denied, being blocked. This will be confusing to the end user who believes they still have credit due to the un-interrupted operation of other service flows. Accordingly, in the prior art systems there is a problem that an end user is denied access to services while they still have credit remaining. As credit exhaustion is approached, the end user is affected by service disruption on some service flows and/or they might not be able to use their credit completely.

### SUMMARY OF THE INVENTION

The present invention relates generally to a communications network wherein service flows between an end user and the network are transported via a gateway which identifies different service flows and notifies them to a credit control function of the network. The credit control function grants a cache of units representing an amount of credit and/or an amount of network resource to the gateway for the identified service flows and provides instructions to the gateway for the identified service flows which enable the gateway to share the cache between service flows, for example if there is a threat of a service flow becoming blocked due to a lack of credit in an end user's account.

A service flow as identified by a gateway may correspond to one or more user data flows. Matching between user data flows and gateway service flows is based on gateway local policy or on instructions sent by the credit control function or by any external data source.

According to a first aspect of the present invention there is provided a method of charging end users for the use of a communications network according to claim 1.

According to a second aspect of the present invention there is provided a communications network according to claim 31.

The granted cache may be communicated to the gateway in a number forms, such as, for example, a number of bytes (Volume allowance) to be allowed through the gateway for the given service flow and the instructions may include a service flow-specific conversion factor, allowing the gateway to transfer units of granted caches from one service flow to another and/or to share units of granted caches between service flows. The cache may also be granted in terms of a right of the end user to send and/or receive data over a certain service flow for a set time period (Time allowance) or to send and/or receive a set volume of data over a certain service flow for a set time period (Time+volume allowance). Time may be measured either in absolute terms (i.e. the time elapsed after the token has been issued) or in terms of active time which only elapses when there is some active traffic for the given service flow (i.e. the counting of active time is frozen when a timeout expires after the latest packet in the service flow). Conversion factors to facilitate resource sharing/transferring also apply to these cases. The cache may also be granted in terms of a right of the end user to generate a given number of events (1 or more). An event in this context represents any possible match by one or more packets sent or received by the user of a generic policy in the gateway. The policy may be pre-provisioned in the gateway or sent as part of the instructions from the credit control function. Conversion factors to facilitate resource sharing/transferring also apply to these cases. The cache may also be granted in terms of combinations of data volume, time and number of events. The units of a granted cache may represent in general any measurable entity that can be counted by the gateway on the specific service flow, and any combination thereof.

The first and second aspects of the present invention facilitate the sharing of the units of a cache between service flows by the gateway based on information from the credit control function. Thus, the credit control function maintains control over issuing or reserving credit for service flows and setting charging rates to be applied to service flows. The possibility of sharing the granted caches between service flows is delegated to the gateway. This enables a more flexible charging function to be implemented so that the gateway is able to share caches between service flows where this is desirable.

The instructions for an identified service flow may specify a measure of network resource to be counted by the gateway for the service flow and an operator, for example a multiplier, to be applied to the counted amount of resource so as to enable the gateway to calculate an amount of a cache consumed by the identified service flow. By providing the gateway with the information to make the charging calculation the gateway has the information it needs to transfer or share units of caches between different service flows. Again, the control of the allocation of charging rates and the issuing or reserving of credit is within the control of the credit control function.

The instructions for an identified service flow may reference a charging pool and the gateway may, for example, in response to a trigger, identify the service flows having instructions referencing the same charging pool and perform the cache sharing procedure in relation to these service flows. In this way, the service flows funded by the same end user and having a compatible charging policy can be allocated to the same charging pool by the credit control function. Then the gateway can share the remaining units of caches granted from the end user's account between these service flows. The trigger may occur at any time, based on policy in the gateway and/or based on instructions from the credit control function. As an example, the trigger may occur when a request from the gateway to the credit control function for a cache is denied for a service flow associated with that charging pool.

In one embodiment, the gateway applies the cache sharing procedure by pooling units from caches for service flows identified in the instructions and by decrementing the resulting charging pool. The charging pool may be decremented in accordance with instructions provided by the credit control function for the service flows. Alternatively, the cache sharing procedure may involve the gateway redistributing units of the caches between service flows identified in the instructions. Different caches may have different units and so associated conversion factors may need to be applied to the units from different caches in order to form a charging pool.

The credit control function may grant the cache and the instructions for a particular service flow simultaneously. In this way the amount of signalling between the credit control function and the gateway is minimised. In response to the gateway identifying a new service flow and requesting an allocation of resource for such a flow, the credit control function issues the gateway with the instructions and the cache and thereafter, the gateway monitors the relevant service flows and decrements the cache by following the instructions, with a possibility to apply a cache sharing procedure as required and in accordance with the instructions.

The cache and the instructions for a particular service flow may be issued in a charging voucher for the service flow. In this case, the gateway may have a first operational phase in which it decrements the cache in a charging voucher for a service flow by applying basic instructions in the charging voucher to that service flow and a second operational phase in which it performs the cache sharing procedure on a plurality of charging vouchers identified by the instructions. The decision to proceed from the first phase to the second phase may be made in response to instructions from the credit control function or may be made by the gateway based on local policy.

The gateway may be arranged so that in response to a cache for an identified service flow becoming exhausted, the gateway makes a decision either to request a further cache for the identified service flow from the credit control function or to perform the cache sharing procedure for identified service flows. Thus, the gateway can be arranged to balance the processing overhead associated with the cache sharing procedure with the signalling overhead associated with the request for a further cache in order to facilitate efficient running of the charging of end users by the network. The request for a further cache may include a request for further units for a cache.

According to a third aspect of the present invention there is provided a method of charging end users for the use of a communications network according to claim 19.

By using rate plans referenced to credit vouchers in this way different charging policies for different service flows can be implemented flexibly without significant network overhead. Where the same credit voucher is specified in at least two of the rate plans, different service flows are funded from the same credit vouchers which reduces the number of credit vouchers as compared to the number of prior art charging vouchers (one per service flow).

According to a fourth aspect of the present invention there is provided a method of charging end users for the use of a communications network according to claim 22.

The credit control function maintains control over the issuing and/or reserving of credit to service flows and over the allocation of charging rates to service flows. However, the additional instructions in the charging voucher give the gateway flexibility to commence a cache sharing procedure, if required. The trigger may occur for example when a request from the gateway to the credit control function for a cache is denied for a service flow having a charging voucher referencing that charging pool so that units from a cache associated with other service flows funded by the same end user can be used by the gateway to fund the service flow for which the request is denied.

According to a fifth aspect of the present invention there is provided a method of charging end users for the use of a communications network according to claim 26.

According to a sixth aspect of the present invention there is provided a method of charging end users for the use of a communications network according to claim 30.

According to a seventh aspect of the present invention there is provided a gateway for transporting service flows between an end user and a communications network according to claim 43.

According to an eighth aspect of the present invention there is provided a credit control function for a communications network according to claim 49.

According to further aspects of the present invention there is provided a communications network according to claims 53, 55, 56 and 57.

According to another aspect of the present invention there is provided a credit control function for a communications network according to claim 60. The instructions may take the form of a charging voucher or a rate plan, as described above. The measure of network resource to which the limit is to be applied may be the same as or different to the measure of network resource to which the operator is to be applied. The instructions relating to the operator to be applied and the limit to be applied may be applied simultaneously. A plurality of network resources and associated operators or limits may be included in a set of instructions. By issuing the instructions in this format flexible charging policies may be implemented.

According to a further aspect of the present invention there is provided a method of charging end users for the use of a communications network according to claim 62.

According to another aspect of the present invention there is provided a credit control function for a communications network according to claim 63.

The end user may use an end user equipment connected to an access network to communicate over the communications network via the service flows with the gateway interfacing the access network and the main network. For example, the communications network may be an Internet Protocol (IP) network, the access network may be a General Packet Radio Service (GPRS) network and the gateway may be a Gateway GPRS Support Node (GGSN).

Other aspects and features of the present invention will become apparent to those ordinarily skilled in the art upon review of the following description of specific embodiments of the invention in conjunction with the accompanying Figures.

### BRIEF DESCRIPTION OF THE DRAWINGS

In order that the present invention is more fully understood and to show how the same may be carried into effect, reference shall now be made, by way of example only, to the Figures as shown in the accompanying drawing sheets, wherein:
Figure 1 shows schematically a network operating online charging according to the present invention including an access network via which an end user obtains access to an IP network, with the access network and the IP network interfaced by a gateway node of the access network;
Figure 2 shows schematically the rate plans and associated credit vouchers granted for three service flows carried by the network of Figure 1 in accordance with one embodiment of an online charging scheme according to the present invention;
Figures 3 and 4 show schematically the charging vouchers granted for three service flows carried by the network of Figure 1 in accordance with a further embodiment of an online charging scheme according to the present invention;
Figure 5 shows schematically the charging vouchers granted for three service flows carried by the network of Figure 1 in accordance with a further embodiment of an online charging scheme according to the present invention;
Figure 6 shows schematically a first approach to the sharing of credit from a credit voucher between two rate plans of the embodiment of Figure 2 and Figure 7 shows schematically a second approach to the sharing of credit from a credit voucher between two rate plans of the embodiment of Figure 2;
Figure 8a shows schematically a first approach to the sharing of credit from a credit pool between two charging vouchers of the embodiment of Figure 3 and Figure 8b shows schematically a second approach to the sharing of credit from a credit pool between two charging vouchers of the embodiment of Figure 3;
Figure 9a shows schematically a first approach to the sharing of credit from a credit pool between three charging vouchers of the embodiment of Figure 4 and Figure 9b shows schematically a second approach to the sharing of credit from a credit pool between three charging vouchers of the embodiment of Figure 4;
Figure 10 shows a flow diagram of steps carried out in the gateway and the OCS of the network of Figure 1 and the signalling between the gateway and the OCS in accordance with an embodiment of the present invention operating using the rate-plans and credit vouchers of Figure 2;
Figure 11 shows a flow diagram of steps carried out in the gateway and the OCS of the network of Figure 1 and the signalling between the gateway and the OCS in accordance with embodiments of the present invention using the charging vouchers of Figures 3 to 5;
Figures 12a to 12c show three steps that can be carried out by the gateway of the network of Figure 1 in accordance with the present invention in order to carry out the credit sharing procedure step of Figure 11;
Figure 13 shows a flow diagram of steps carried out in the gateway and the OCS of the network of Figure 1 and the signalling between the gateway and the OCS in accordance with an embodiment of the present invention using the charging vouchers of Figures 3 to 5;
Figure 14 shows an alternative format of rate plan to those shown in Figure 2;
Figure 15 shows a flow diagram of steps carried out in the gateway and the OCS of the network of Figure 1 and the signalling between the gateway and the OCS in accordance with a further embodiment of the present invention; and
Figures 16a to 16g show further examples of vouchers or tokens issued by the OCS of the network of Figure 1 in accordance with the present invention.

### DETAILED DESCRIPTION OF PREFERRED EMBODIMENTS

There will now be described by way of example the best mode contemplated by the inventor for carrying out the invention. In the following description, numerous specific details are set out in order to provide a complete understanding of the present invention. It will be apparent, however, to those skilled in the art that the present invention may be put into practice with variations of the specific.

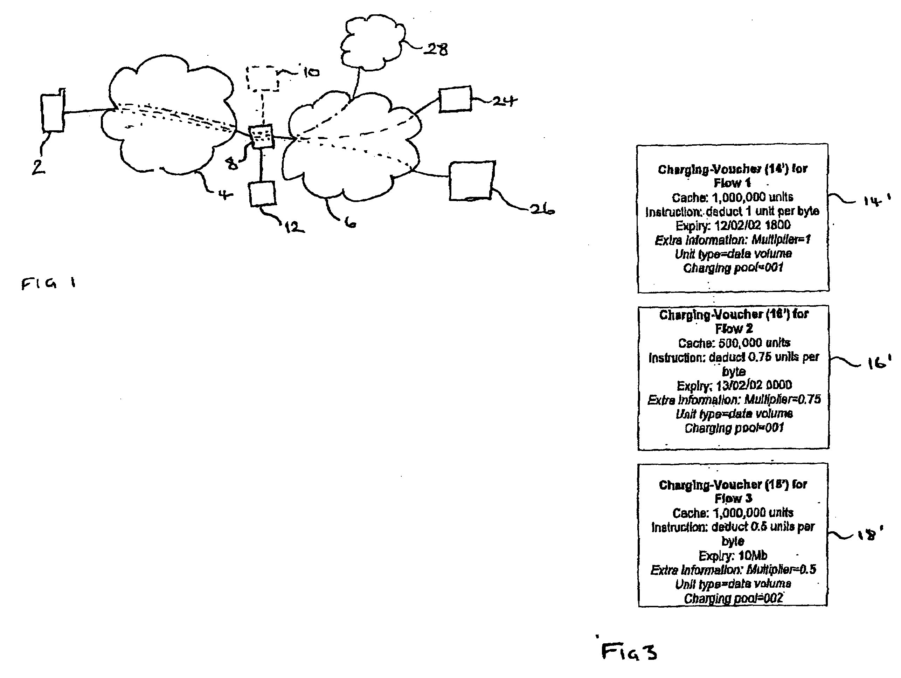

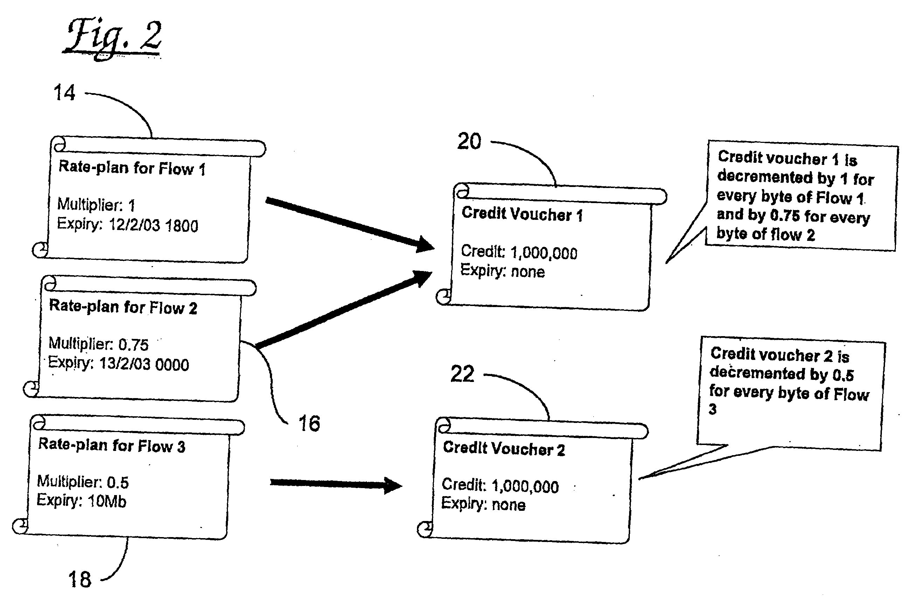

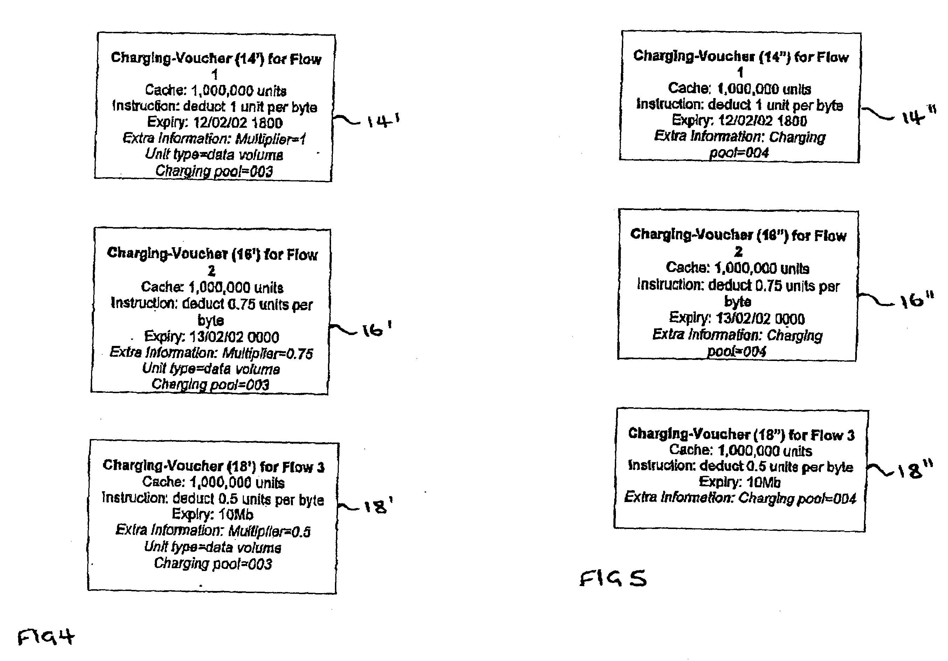

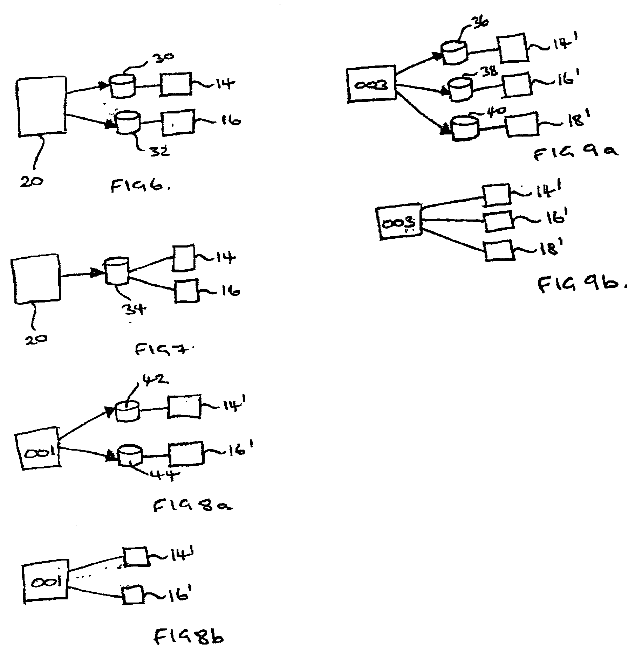

With reference to Figure 1, an end user having an end user equipment (2), such as a mobile or stationary telephone or computing device, may access an Internet Protocol (IP) network (6) via an access network (4).

The access network (4) may be a packet switched network, such as a General Packet Radio Service (GPRS) network, which is interfaced with the IP network (6) via a gateway node or Gateway GPRS Support Node (GGSN) (8) of the GPRS Network. The IP network (6) may be a public or private intranet or internet, which may be made up of several interfaced networks.

The GGSN (8) transports data packets between the access network (4) and the IP network (6) and so is a traffic plane function network element. The GGSN (8) or an entity associated with the GGSN, for example the unit (10) shown in dotted lines in Figure 1, has the functionality to identify the separate packet streams or service flows the GGSN carries between each end user (2) and the IP network (6) and to measure the volume of data carried on each such service flow. The term gateway used as a general term herein includes a gateway such as a GGSN (8) and any associated entities, such as the unit (10), or another element in the traffic plane between the GGSN (8) and the IP network (6), involved in the method of charging end users according to the present invention.

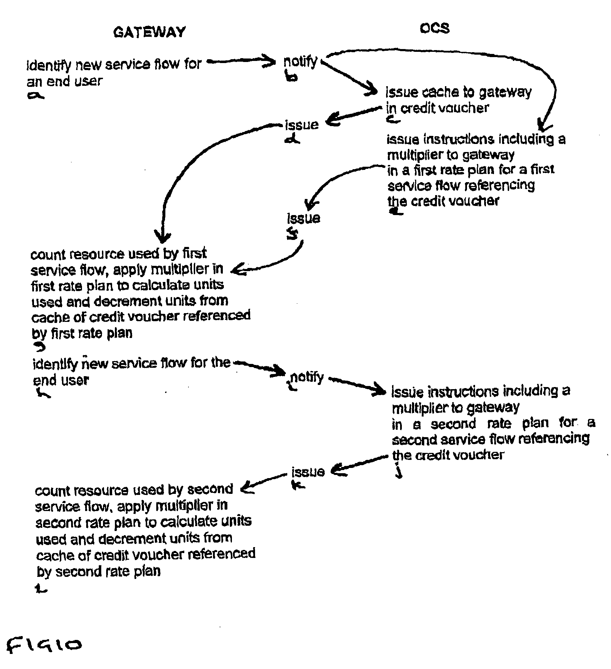

The network includes an Online Charging System (OCS) (12) for controlling online charging to end users. The end user of the equipment (2) establishes a GPRS session by requesting a Primary Packet Data Protocol (PDP) context. The end user may then access services available on the IP network (6) via the GPRS network (4). The GGSN (8) accesses the charging policies and/or rules for the end user of the equipment (2) and identifies any service flows that are initiated by the end user of the equipment (2) (box a in Figure 10). For a service flow 1 (shown in dashed lines in Figure 1) to destination terminal (24) that is initiated, the GGSN (8) requests a voucher from the OCS (12) (box b in Figure 10). The OCS (12) grants a first rate plan (14) for the service flow 1 (See Figure 2 and boxes e and f in Figure 10) and a first credit voucher (20) referenced by the first rate plan (boxes c and d in Figure 10). The credit voucher (20) contains a cache.

Each credit voucher contains a cache which contains a number of abstract units which represent an amount of an end user's credit issued from or reserved in an end user's account by the OCS (12). The cache may be decremented unit by unit by the gateway (8) as service flows are transported over the gateway. For example, a unit of a cache may be decremented for a predetermined amount of network resource being consumed by a service flow. In this sense the cache also represents an amount of network resource.

The rate plan (14) carries a multiplier by which a measure of network resource over the service flow 1 counted by the GGSN (8) is multiplied in order to obtain an amount of units to be deducted from the cache of the credit voucher (20) referenced by that rate plan. As data is sent and/or received over the service flow 1, the GGSN (8) counts the amount of the network resource measure used and applies the relevant multiplier to the counted amount in order to obtain an amount of units (box g in Figure 10). In doing this the GGSN (8) is performing a charging rate calculation which in the prior art is carried out by the OCS (12). This calculated amount of units is then deducted by the GGSN (8) from the cache of the credit voucher (20) (box g in Figure 10). In the example of Figure 2, the measure of network resource that the GGSN (8) counts is the number of bytes transported over a service flow. Thus in the Figure 2 example, the credit voucher (20) has one unit of the cache deducted from it for each byte of data transmitted over the service flow 1, as counted by the GGSN. This is because the rate plan (14) has a multiplier of 1.

A credit voucher (20, 22) is granted by the OCS (12) if the end user of the equipment (2) has sufficient credit in their account. The OCS (12) deducts the relevant amount of credit from or reserves the relevant amount of credit in the end user's account when the credit voucher (20, 22) is granted. The end user can increase the amount of credit held in their account, for example by making a payment of money into that account.

When the end user of the equipment (2) initiates a service flow 2 (shown in dotted lines in Figure 1) to destination terminal (26), the GGSN (8) requests a voucher from the OCS (12) for the service flow 2 (boxes h and i in Figure 10). If the charging policy for the service flow 2 is compatible with the charging policy for the service flow 1, then the OCS has the option of granting only a second rate plan (16) for the service flow 2 and referencing the second rate plan to the already granted first credit voucher (20) (boxes j and k in Figure 10). In addition, the OCS may grant the second rate plan and supply an additional cache of units to be added to the cache of the already granted first credit voucher (20). As data is sent and/or received over the service flow 2, the GGSN (8) counts the amount of the network resource measure used, applies the relevant multiplier to the counted amount in order to obtain an amount of units, which is then deducted by the GGSN (8) from the cache of the credit voucher (20) (box I in Figure 10). In the example of Figure 2, the measure of network resource that the GGSN (8) counts is the number of bytes transported over a service flow. Thus in the Figure 2 example, the credit voucher (20) has 0.75 units of the cache deducted from it for each byte of data transmitted over the service flow 2, as counted by the GGSN. This is because the rate plan (16) has a multiplier of 0.75.

When the end user of the equipment (2) initiates a service flow 3 (shown in dot-dashed lines in Figure 1) to destination network (28), the GGSN (8) requests a voucher from the OCS (12) for the service flow 3. If the charging policy for the service flow 3 is not compatible with the charging policy for the service flows 1 and 2, the OCS grants a third rate plan (16) for the service flow 3 and references the third rate plan to a second credit voucher (22), which the OCS now grants. As data is sent and/or received over the service flow 3 the GGSN (8) counts the amount of the network resource measure used, applies the relevant multiplier to the counted amount in order to obtain an amount of units, which is then deducted by the GGSN (8) from the cache of the second credit voucher (22). In the example of Figure 2, the measure of network resource that the GGSN (8) counts is the number of bytes transported over a service flow. Thus, in the Figure 2 example, the credit voucher (22) has 0.5 units deducted from its cache for each byte of data transmitted over the service flow 3, as counted by the GGSN. This is because the rate plan (18) has a multiplier of 0.5.

By issuing one credit voucher (20) for a plurality of service flows (flows 1 and 2) the number of credit vouchers for a given number of service flows is reduced as compared with the prior art system when one charging voucher is issued for each service flow. Therefore, the problems caused by an end user's credit becoming used up due to the allocation or reservation of that credit to a large number different vouchers are reduced.

A rate plan may expire at a predetermined time, as shown in Figure 2 for rate plans (14 and 16). This may be required, for example, when a charging policy for a service flow offers a first charging rate for a first period of time, for example the first 30 minutes, and a second charging rate for a subsequent period of time or when a charging policy for a service flow offers different rates at different times of the day. When the rate plan expires, then it is returned by the GGSN (8) to the OCS (12) and the OCS (12) grants a further rate plan for that service flow with a multiplier reflecting the new charging rate. Alternatively, or additionally, a rate plan may expire after a predetermined volume of data (number of bytes) has been transported in a service flow, as shown in Figure 2 for rate plan (18). This may be required, for example, when a charging policy for a service flow offers a first charging rate for a first volume of data and a second charging rate for subsequent data. Again, when the rate plan expires, then it is returned by the GGSN (8) to the OCS (12) and the OCS (12) grants a further rate plan for that service flow with a multiplier reflecting the new charging rate. Also, zero rate plans can be granted by the OCS (12) which expire after a given data volume or after a given time period.

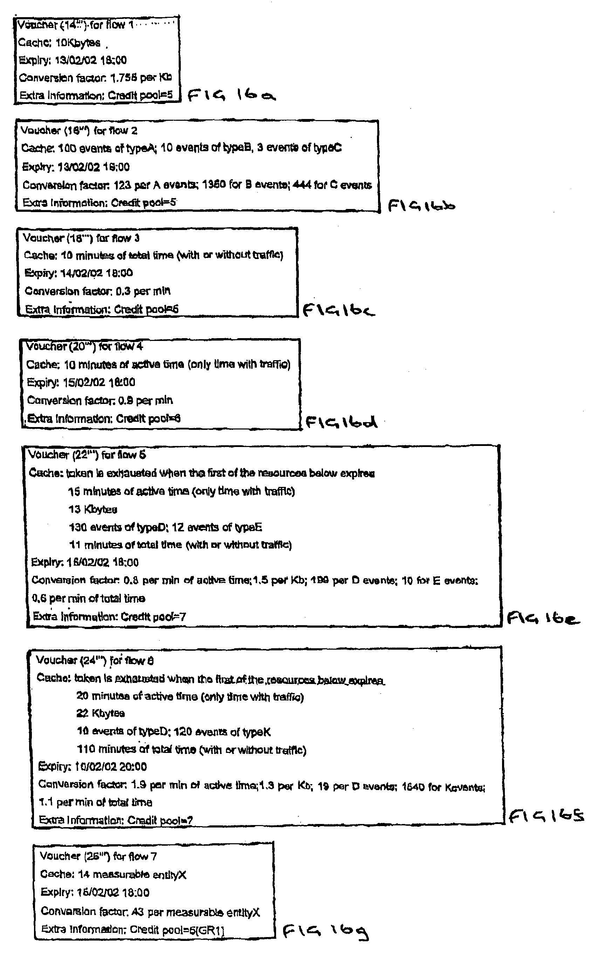

Alternatively, the OCS (12) may supply a rate plan indicating new multipliers that are to take effect at some specified future time or after a specified volume of data has been used. Such a rate plan is shown in Figure 14. The rate plan includes two pairs of linked elements. A first pair of elements is applied by the gateway (8) to the service flow 1 between 09.00 and 17.00 hours during which time the gateway applies a multiplier of 1 to bytes of data transported over service flow 1. A second pair of elements is applied by the gateway to the service flow 1 between 17.00 and 09.00 hours during which time the gateway applies a multiplier of 0.75 to bytes of data transported over service flow 1. So when the multiplier value is to be changed in accordance with the charging policies of the OCS (12) there need not be signalling between the OCS (12) and the gateway (8). Instead, when the OCS (12) issues a rate voucher it can instruct the gateway to implement the required changes in charging rate. Accordingly, it can be seen that the present invention facilitates the implementation of complex charging policies in a simple way with minimum signaling between the OCS (12) and the gateway (8).

In the examples shown in Figure 2 the credit vouchers (20, 22) expire when the cache carried by them is consumed. The credit voucher (20, 22) is then returned by the GGSN (8) to the OCS (12) and the OCS (12) grants a further credit voucher (to which the rate plans associated with the consumed credit voucher are referenced). Before granting the further credit voucher the OCS (12) checks that the end user of the equipment (2) has sufficient credit in their account. As the OCS (12) grants the further credit voucher, it deducts the relevant amount of credit from or reserves the relevant amount of credit in the end user's account.

Credit vouchers may also expire at a pre-determined time, for example where a charging policy is applied which allocates the end user a free allowance of credit per day, with no carrying over of credit. Then the credit vouchers for that end user would all be set to expire at 00.00 hours each day. The OCS (12) would then grant replacement credit vouchers using the next day's credit allocation.

According to the present invention the right is granted to an end user to receive network resource (eg. data) at a particular charging rate by the OCS (12) issuing a rate plan (14 - 18) separately from the grant of credit, which is granted by the OCS issuing a credit voucher (20-22). Each rate plan (14 - 18) references a single credit voucher (20-22) and a plurality of rate plans (14, 16) can reference the same credit voucher (20). As in the prior art systems, the OCS (12) decides which charging rate to allocate to which service flow. A difference from the prior art systems, is that the GGSN (8) undertakes the charging rate calculation, based on information received from the OCS (12) in the rate plans (14 - 18), by applying the multiplier to the amount of resource counted by the GGSN (8) to determine the number of units to deduct from the cache of the credit voucher (20-22).

The rate plans (14 - 16) may share a credit voucher (20) if the rate plans are compatible, ie. if the credit held on the credit voucher (20) is transferable between the rate plans and their associated service flows. In the example of Figure 2, the service flow 3 is incompatible with the service flows 1 and 2 and so a separate credit voucher (22) is granted by the OCS (12) for the rate plan (18) for the service flow 3. This may be necessary, for example if the credit for the service flow 3 is subsidised by a service provider.

The GGSN (8) may be set up in accordance with a first approach, illustrated in Figure 6. This first approach may be in accordance with the local policy of the GGSN or may be in accordance with instructions from the OCS (12). In accordance with this first approach the units in the cache in the credit voucher (20) are split between all the rate plans (14, 16) referenced to that voucher. The cache may be split up between the rate plans into separate pots (30, 32), for example by being split evenly between the rate plans, split based on the rates of data transfer across the service flows with which the rate plans are associated or split based on the multiplier which is to be applied by the different rate plans. The GGSN (8) then decrements the pot (30) associated with the rate plan (14) as data is transferred over service flow 1 and decrements the pot (32) associated with the rate plan (16) as data is transferred over service flow 2. At certain times, the GGSN (8) may pool all the remaining units from the pots (30, 32) associated with the rate plans (14, 16) referencing the voucher (20), and then may re-divide the units up between the pots. This re-sharing of the units could be implemented by the GGSN (8) for example, when the units in a pot associated with one of the rate plans becomes exhausted, when a new rate plan which references the credit voucher (20) is granted by the OCS (12), when a rate plan which references the credit voucher is returned to the OCS (12) by the GGSN (8), when a request for a further cache from the OCS is denied, or at predetermined time intervals.

When the OCS (12) grants a voucher (20) or a rate plan (14, 16), the message passed from the OCS (12) to the GGSN (8) granting the voucher or the rate plan can also provide the GGSN (8) with rules as to how the cache in the credit voucher (20) should be split between the rate plans (14, 16) and rules as to when and how to re-share the units of the cache in the voucher between the rate plans.

As the cache in the a credit voucher (20) becomes diminished, this re-sharing procedure will become more frequent, because the number of units allocated to each pot (30, 32) will reduce at each re-sharing of the remaining units of the cache of the credit voucher (20). In accordance with the present invention, the GGSN (8) can be set up to balance the processing resource associated with the re-division of the remaining units of the cache with the signalling resource required to request more units for the cache of a credit voucher. Thus, the GGSN (8) can avoid repeated re-sharing operations on a smaller and smaller pool of units provided there is still credit available for that end user at the OCS. For example, the GGSN (8) may request a further cache from the OCS when one of the pots (30, 32) becomes exhausted and allocate this cache directly to the exhausted pot. If there is no remaining credit in the end user's account, the re-sharing is carried out by the OCS which continues until the remaining units of the cache in the credit voucher fall below a predetermined threshold and then the GGSN (8) will block the service flows 1 and 2 funded by the credit voucher (20), or may carry out a cache sharing procedure with the caches of other credit vouchers granted for the same end user.

Alternatively, the GGSN (8) can be set up in accordance with a second approach, as illustrated in Figure 7, to decrement a single pot (34) of units of the cache in the credit voucher (20) by amounts of units calculated for the service flow 1 in accordance with the first rate plan (14) as data is transported over the service flow 1 and by amounts of units calculated for the service flow 2 in accordance with the second rate plan (16) as data is transported over the service flow 2.

A rate plan (14-18) can be composed in a generic format. In an example of this generic format a rate plan consists of at least one element, with each element having the same structure. The structure of a single element consists of the following two pieces of information:
(i) a unit type; and
(ii) an amount of the unit type.

The unit type (i) indicates the measure of network resource which the GGSN (8) counts, examples of which are time, data volume and active time (time which is only counted while data is transported over the service flow). For a unit type of time or active time, the amount of the unit type could typically be a number of minutes and/or hours. For a unit type of data volume, the amount of the unit type could typically be a number of bytes. Alternatively, the amount of unit type could be a multiplier plus a reference to a credit voucher (20, 22).

In the examples shown in Figure 2, the rate plans would have the following format:
Rate plan (14);

| | |
|---|---|
| Element 1 | (i) unit type = data volume (ii) amount = (multiplier 1; credit voucher 20)) |
| Element 2 | (i) unit type = time (ii) amount = expiry at 1800hrs on 12/02/03 |

Rate plan (16)

| | |
|---|---|
| Element 1 | (i) unit type = data volume (ii) amount = (multiplier 0.75; credit voucher (20)) |
| Element 2 | (i) unit type = time (ii) amount = expiry at 0000hrs on 13/02/03 |
| | |

Rate plan (18)

| | |
|---|---|
| Element 1 | (i) unit type = data volume (ii) amount = (multiplier 0.5; credit voucher (22)) |
| Element 2 | (i) unit type = data volume (ii) amount = 10Mb |

The resources identified by all the elements in the rate plan are applied simultaneously. Thus, for rate plan (14) the charging rate of 1 unit of the credit voucher (20) per byte in service flow 1 is available to the end user until 1800 hours on February 12, 2003. For rate plan (16) the charging rate of 0.75 units of credit voucher (20) per byte of service flow 2 is available to the end user until 0000 hours on February 13, 2003. For rate plan (18) the charging rate of 0.5 units of the credit voucher (22) per byte in service flow 3 is available until 10Mb of data has been transported over service flow 3. The multiplier used in the rate plans (14 - 18) is a number which converts between the measure of network resource identified in the rate plan by the unit type and the abstract units of the cache of the credit voucher (20, 22) referenced by that rate plan.

The credit vouchers (20, 22) need only to contain a number of units in a cache, the units of this cache need not be specified in the credit voucher. The units contained in a cache of a credit voucher only become meaningful when combined with a rate plan. The rate plan provides the means to convert from the abstract units in the cache to a measure of network resource which is counted by the GGSN (8), such as time or data volume.

There is advantage associated with the prior art system in which a charging voucher is granted for each service flow and an amount of credit is deducted from the end user's account or reserved in the end user's account for each charging voucher the OCS (12) grants. However, the problem still exists that when the end user's account becomes empty the next voucher requested by the GGSN (8) for a service flow will not be granted and that service flow will be blocked, even if the end user still has credit allocated or reserved for other vouchers granted by the OCS which vouchers ensure the ongoing operation of their associated service flows.

According to a further embodiment of the present invention, when an end user's account becomes empty, and the OCS (12) has to deny a request from the GGSN (8) for a charging voucher, the GGSN (8) then combines caches from charging vouchers associated with different service flows of that end user into a charging pool for that end user. The GGSN then uses the charging pool to fund each of the end user's service flows, including the one for which the OCS (12) denied the request for a charging voucher. In this way the service flows requested by the end user will continue to operate until the end user's credit is used up.

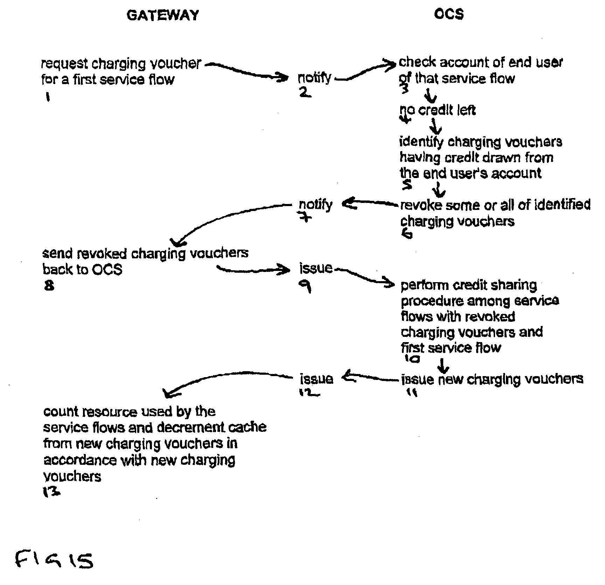

Considering now Figure 3, the end user of the end user equipment (2) has three service flows operating, with a charging voucher (14', 16', 18') issued by the OCS (12) for each of the service flows. The charging voucher (14') carries 1,000,000 units of a cache and carries the instructions for the GGSN (8) to deduct one unit of the cache per byte passed on service flow 1 until 1800 hours on February 12, 2003. The gateway identifies and notifies the OCS of new service flows (boxes m and n in Figure 11). The OCS (12) makes the decision about which charging rate to apply to each service flow. The OCS also makes an allocation of credit, represented by a number of units in a cache to the service flow and calculates the charging rate, ie. how may units should be decremented from the cache per unit time or data volume. The OCS passes this information to the GGSN (8) in the charging voucher (boxes o and p in Figure 11) and the GGSN carries out the counting of the resource and decrements the cache in accordance with these instructions (box q in Figure 11). The charging voucher (16') is granted with 500,000 units in its cache and carries the instructions for the GGSN (8) to deduct 0.75 units from the cache per byte passed on service flow 2 until 0000 hours on February 13, 2003. The charging voucher (18') carries 1,000,000 units in its cache and carries the instructions for the GGSN (8) to deduct 0.5 units from the cache per byte passed on service flow 3 until 10Mb of data have been passed on service flow 3.

However, the charging vouchers shown in Figure 3 are configured to contain additional information as compared to prior art charging vouchers because they also specify a charging pool, a multiplier and a unit type.

Consider the situation for Figure 3 when the cache in the charging voucher (16') has just run out. The GGSN (8) requests a further charging voucher for the service flow 2 from the OCS (12) (boxes r and s in Figure 11). Consider then the situation when there is insufficient credit left in the end user's account for the OCS (12) to grant the charging voucher to the GGSN (8) (boxes t and u in Figure 11). When the GGSN (8) receives a message from the OCS (12) that a further charging voucher for service flow 2 cannot be granted (boxes v and v' in Figure 11), it analyses the charging pool data on the exhausted charging voucher (16'). The exhausted charging voucher (16') references charging pool 001 and so the GGSN (8) locates other charging vouchers which also reference the charging pool 001 (box w in Figure 11). Thus, the GGSN (8) identifies charging voucher (14') and pools the caches for charging voucher (14') (for example, then having 375,423 units left in its cache) with that for charging voucher (16') (box x in Figure 11 and box y in Figure 12). Then the GGSN (8) funds service flows 1 and 2 from the resulting charging pool 001 of 375,423 units. The GGSN (8) funds the service flow 1, in accordance with the unit type and multiplier provided in the charging voucher (14') and so decrements 1 unit from the charging pool 001 for each byte of data counted on service flow 1. The GGSN (8) funds the service flow 2, in accordance with the unit type and multiplier provided in the charging voucher (16') and so decrements 0.75 units from the charging pool 001 for each byte of data counted on service flow 2 (box y in Figure 12a).

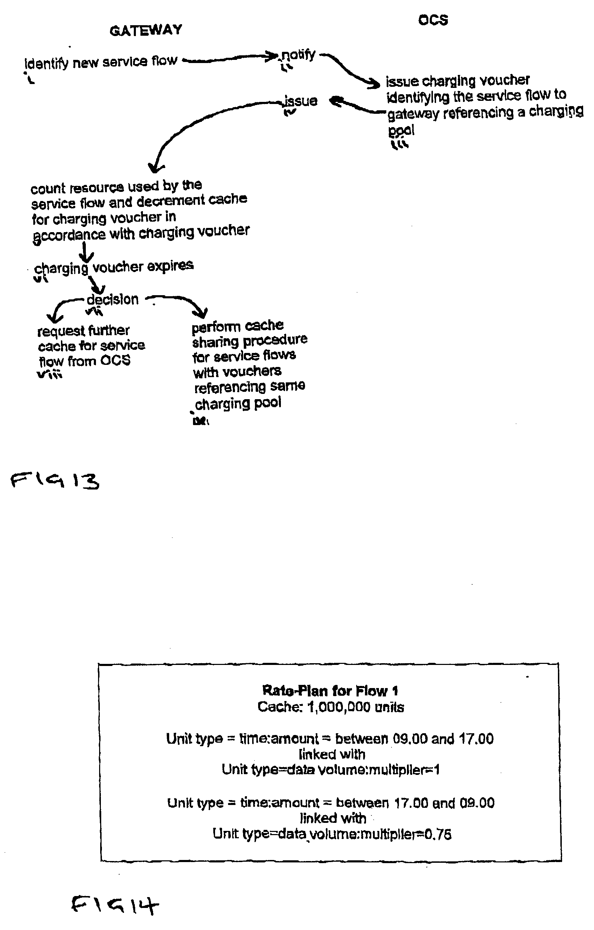

When sharing the charging pool 001 between the service flows in accordance with the instructions in the rate vouchers (14') and (16'), a first approach, as illustrated in Figure 8a, in which the charging pool 001 is split by the GGSN (8) into separate pots (42, 44) each associated with a single charging voucher can be used. According to a second alternative approach, as illustrated in Figure 8b the single charging pool 001 is decremented by the GGSN (8) in accordance with the instructions in the rate vouchers (14', 16').

Accordingly, when the user's credit is exhausted the online charging system switches from a procedure, which is used in the prior art, in which:
the OCS (12) undertakes the rate calculation and informs the GGSN (8) how many units to deduct per unit volume of resource passing over the service flow (see 'Instruction' in vouchers (14') to (18') in Figure 3);
to a procedure, in which:
the GGSN (8) undertakes the rate calculation by applying the multiplier to the unit type, in accordance with the instructions from the OCS (12) contained in the vouchers (14') to (18') (see 'Multiplier' and 'Unit Type' in vouchers (14') to (18') in Figure 3).

In the Figure 4 example, consider the situation when the cache of the charging voucher (18') has just run out. The GGSN (8) requests a further charging voucher for the service flow 3 from the OCS (12) (boxes r and s in Figure 11). Consider then the situation in which there is insufficient credit left on the end user's account for the OCS (12) to grant the charging voucher to the GGSN (8) (boxes t and u in Figure 11). When the GGSN (8) receives a message from the OCS (12) that a further charging voucher for service flow 3 cannot be granted (boxes v and v' in Figure 11), it analyses the charging pool data on the expired charging voucher (18'). The expired charging voucher (18') references charging pool 003 and so the GGSN (8) locates other charging vouchers which also reference the charging pool 003 (box w in Figure 11). Thus, the GGSN (8) identifies rate voucher (14') (then having 645,657 units left in its cache) and rate voucher (16') (then having 123,467 units left in its cache) and pools the cache for charging voucher (18') with that for charging vouchers (14') and (16') and then funds service flows 1 to 3 from the resulting charging pool 003 of 769,124 units, in accordance with the unit types and multipliers in the extra information in the respective charging vouchers (14'), (16') and (18') (box x in Figure 11 and box y in Figure 12a).

When sharing the charging pool between the service flows in accordance with the instructions in the charging vouchers (14') to (18') of Figure 4, a first approach, illustrated in Figure 9a, can be used in which the charging pool 003 is split by the GGSN (8) into separate pots (36 - 40) each associated with a respective single rate voucher (14' - 18'). Alternatively, a second approach, illustrated in Figure 9b, can be used in which the single charging pool 003 is decremented by the GGSN (8) in accordance with the instructions in the rate vouchers (14' - 18').

The embodiments of Figures 3 and 4 change the association between charging vouchers and service flows upon credit exhaustion. When a voucher grant fails for an end user's service flows due to insufficient credit in the end user's account, the caches in the charging vouchers are combined in the GGSN (8) into charging pools (eg. 001 and 003), in accordance with instructions provided in the charging vouchers. The charging pools are then decremented, again in accordance with the instructions provided in the charging vouchers. The GGSN (8) has sufficient instructions in the granted charging vouchers it receives from the OCS (12) to operate the cache pooling procedure, without going back to the OCS (12) for further instructions. This means that the cache pooling can occur in the GGSN (8) without incurring signalling overhead between the OCS and the GGSN.

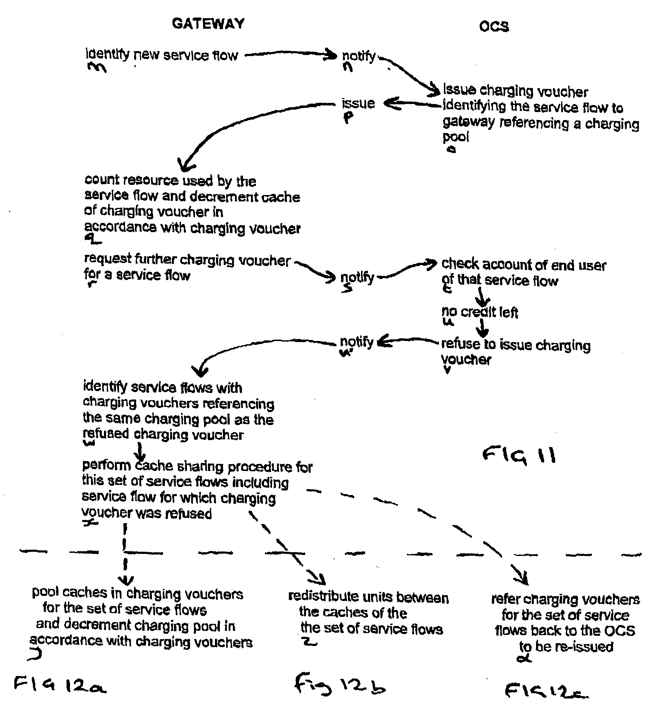

Referring now to Figure 5, the end user of the end user equipment (2) has three service flows operating, with a charging voucher (14", 16", 18") issued by the OCS (12) for each of the service flows. The charging voucher (14") is issued with 1,000,000 units in its cache and carries the instructions for the GGSN (8) to deduct one unit from its cache per byte passed on service flow 1 until 1800 hours on February 12, 2003. Again, the OCS (12) makes the decision about which charging rate to apply to each service flow. The OCS also makes an allocation of credit, by assigning caches of units to the service flows and the OCS calculates the charging rate, ie. how may units should be decremented from the cache per unit time or data volume. The OCS passes this information to the GGSN (8) in the charging voucher (boxes o and p in Figure 11) and the GGSN carries out the counting of the resource and decrements the cache in accordance with these instructions (box q in Figure 11). The charging voucher (16") carries 1,000,000 units in its cache and carries the instructions for the GGSN (8) to deduct 0.75 units from its cache per byte passed on service flow 2 until 0000 hours on February 13, 2003. The charging voucher (18") is issued with 1,000,000 units of credit and carries the instructions for the GGSN (8) to deduct 0.5 units per byte passed on service flow 3 until 10Mb of data have been passed on service flow 3.

In the example in Figure 5, the charging vouchers are configured to contain additional information because they indicate a charging pool 004. Consider the situation in the Figure 5 example in which the cache for the charging voucher (18") has just run out. The GGSN (8) requests a further charging voucher for the service flow 3 from the OCS (12) (boxes r and s in Figure 11). Consider then the situation when there is insufficient credit left on the end user's account for the OCS (12) to grant the charging voucher to the GGSN (8) (boxes t and u in Figure 11). When the GGSN (8) receives a message from the OCS (12) that a further charging voucher for service flow 3 cannot be granted (boxes v and v' in Figure 11), it analyses the charging pool data on the expired charging voucher (18"). The expired charging voucher (18") references charging pool 004 and so the GGSN (8) locates other charging vouchers which also reference the charging pool 004 (box w in Figure 11).

In one embodiment, the GGSN (8) identifies charging vouchers (14") and (16") as referencing the same charging pool as charging voucher (18") and returns all of these vouchers to the OCS (12) requesting replacement vouchers (box α in Figure 12c). The OSC (12) then shares the remaining credit between the three existing service flows and provides the GGSN (8) with replacements for the vouchers (14"), (16") and (18"). For example the replacement for voucher (14") could have a credit of 500,000 units and the replacement for voucher (16") could have a credit of 500,000 units and the replacement for voucher (18") could have a credit of 1,000,000 units.

In an alternative embodiment, after the GGSN (8) identifies the charging vouchers (14") and (16") as referencing the same charging pool as charging voucher (18") it could itself carry out a redistribution of units between the caches of the charging vouchers (box z in Figure 12b). For example, in this situation the GGSN (8) could be set up to transfer 25% of the remaining units from the cache of the un-exhausted charging vouchers (14", 16") referencing the same charging pool as the exhausted charging voucher (18"). Thus, if the cache in the un-exhausted vouchers (14" and 16") in the Figure 5 example both contain 1,000,000 when the credit pool in the voucher (18") becomes exhausted, the GGSN (8) would transfer 250,000 units from the cache of the voucher (14") to voucher (18") and 250,000 units from the cache of the voucher (16") to voucher (18"). This would result in vouchers (14") and (16") having 750,000 units of left each in their caches and in voucher (18") having 500,000 units in its cache. For the GGSN (8) to transfer the units between charging vouchers in this way, the units in the caches of each of the charging vouchers would have to be the same. This can be achieved by the charging vouchers for the same end user and having caches granted in the same units being given the same charging pool number by the OCS.

If the units of the caches in the charging vouchers are different then for the GGSN (8) to share or transfer units between the caches the GGSN (8) needs instructions about how to convert between the different units from the OCS (12). Where the units in the caches to be shared are different, the gateway requires instructions, for example in the form of a conversion factor, in order to convert between the different units. For example, associated conversion factors may be applied to each different units to convert into generic units which can then be shared between caches and reconverted back into the different units. For example, this can be done as described below in relation to Figures 16a to 16g.

The processes described above in relation to Figure 5 could be repeated until the total units remaining in the caches fell below a predetermined threshold, after which the processing or signalling overhead involved becomes prohibitive, at which point all the remaining service flows of the end user could be blocked until the end user makes a payment into their account.

The charging vouchers (14', 14" to 18', 18") may use the same generic structure including elements as described above in relation to the rate plans (14 - 18). The charging vouchers (14', 14" to 18', 18") can also take the form of the rate voucher of Figure 14, so that the gateway has instructions to change charging rates as required by the charging policies of the OCS.

According to a further embodiment of the present invention a decision of whether to request an additional cache from the OCS (12) or to carry out a cache sharing procedure is delegated to the gateway (8). Referring now to Figure 13, the gateway identifies new service flows (box i) and notifies them to the OCS (box ii) and in response the OCS issues a charging voucher (box iii and iv) in accordance with one of Figures 3 to 5. The gateway then counts resource consumed by the service flows and decrements units from the caches of the vouchers in accordance with the instructions in the vouchers (box v). When a charging voucher expires or is exhausted (box vi), the gateway makes a decision (box vii) either to request a further cache for the service flow with the expired or exhausted voucher from the OCS (box viii) or to perform cache sharing between vouchers referencing the same charging pool as the expired or exhausted voucher (including the expired or exhausted voucher) (box ix). This enables the gateway to balance the signalling overhead associated with requesting a further cache and the processing overhead associated with cache sharing and to proceed with the most efficient approach.

Certain aspects of the charging processes described above and identified as being carried out by the gateway (8), may equally be carried out by a network entity, such as the unit (10), associated with the gateway (10). The term gateway is used generally herein to include any such associated network entities.

In an alternative embodiment of the present invention, shown in Figure 15, the re-sharing of credit is carried out by the OCS (12). The Figure 15 embodiment can be used in a charging method in which the prior art charging vouchers are sent by the OCS (12) to the gateway (8). The prior art charging vouchers simply identify a service flow and include an amount of measured network resource for the service flow. The Figure 15 embodiment can also be used in a charging method in which charging vouchers or combined rate plans and credit vouchers as described herein are sent by the OCS (12) to the gateway (8). In the Figure 15 embodiment, the gateway (8) requests a charging voucher for a first service flow (boxes 1 and 2). Consider the situation in which the OCS checks the account of the end user of that service flow and finds that there is no credit left (boxes 3 and 4). The OCS then identifies already issued charging vouchers that were issued from that end user's account (box 5). The OCS then prepares a message revoking some or all of the charging vouchers drawn from that end user's account and sends it to the gateway (boxes 6 and 7). In response the gateway (8) sends the revoked charging vouchers back to the OCS (12) (boxes 8 and 9). The OCS (12) performs a cache sharing procedure, for example, one of the procedures described above and carried out by the gateway, and issues new charging vouchers replacing the revoked charging vouchers plus a new charging voucher for the first service flow (boxes 10 to 12). Then the gateway (8) monitors each of the service flows, counts the resource used by each service flow and decrements the new charging voucher issued for that service flow (box 13).

The vouchers shown in Figures 16a to 16g may be used, for example, in accordance with the embodiments of the present invention described above in relation to any one of Figures 11 to 13. Figure 16a shows a voucher or token (14"') granted for service flow 1 across the network of Figure 1. It is granted by the OCS (12) with a cache of 10,000 units, each unit corresponding to one byte of data. Therefore, in this case the cache represents an amount of network resource, which the OCS (12) equates to an amount of credit allocated from or reserved in an end user's account. The voucher expires on February 13, 2002 at 18.00 hours. The voucher has a conversion factor of 1.755 per kilobyte and references a credit pool (equivalent to a charging pool) no. 5. Figure 16b shows a voucher or token (16"') granted for service flow 2 across the network of Figure 1. It is granted by the OCS (12) with a cache of 100 events of type A, 10 events of type B and 3 events of type C. So the cache corresponds to events, for example, the type A event could be the downloading of a movie. Therefore, in this case the cache represents an amount of network resource, which the OCS (12) equates to an amount of credit allocated from or reserved in an end user's account. The voucher expires on February 13, 2002 at 19.00 hours. The voucher has a conversion factor of 123 per A event, 1350 for B events and 444 per C event and references a credit pool (equivalent to a charging pool) no. 5. Figure 16c shows a voucher or token (18"') granted for service flow 3 across the network of Figure 1. It is granted by the OCS (12) with a cache of 10 minutes of time. Therefore, in this case the cache represents an amount of network resource, which the OCS (12) equates to an amount of credit allocated from or reserved in an end user's account. The voucher expires on February 14, 2002 at 18.00 hours. The voucher has a conversion factor of 0.3 per minute and references a credit pool (equivalent to a charging pool) no. 5.

Now consider that the vouchers of Figures 16a to 16c were granted in relation to the same end user. Now also consider that one of the vouchers expires. Then the gateway is provided by the OCS with sufficient information to conduct sharing of units between the caches of the vouchers of Figures 16a to 16c, due to the inclusion of the conversion factor in the vouchers. The conversion factor enables the remaining units in each of the caches in the vouchers of Figures 16a to 16c to be converted into a generic unit, which can then be shared or transferred between the vouchers. So the voucher of Figure 16a when issued has a cache of 10kb, which when multiplied by the conversion factor if 1.755 per kb corresponds to 17.55 generic units. The voucher of Figure 16b when issued has a cache of 100 events of type A, 10 events of type B and 3 events of type C, which when multiplied respectively by the conversion factors of 123 per A event, 1350 for B events and 444 per C event corresponds to (100x123)+(10x1350)+(3*444) = 27,132 generic units. The voucher of Figure 16c when issued has a cache of 10 minutes of time, which when multiplied by the conversion factor of 0.3 per minute corresponds to 3 generic units.

Consider now the situation when the voucher of Figure 16c is exhausted. The gateway, in accordance with local policy or in accordance with instructions with the OCS may, for example in response to a trigger, such as the end user's credit becoming exhausted transfer units to the cache of the voucher of Figure 16c from the caches of the vouchers referencing the same credit pool 5. So for example, 123 generic units from the cache of the voucher of Figure 16b could be transferred to the voucher of Figure 16c. This would result in the cache of the voucher of Figure 16b being decremented by one event of type A and the cache of the voucher of Figure 16c being credited with 410 minutes of time.

Thus, the conversion factors provided in the vouchers of Figures 16a to 16g enable the gateway to perform a cache sharing procedure between the caches of the vouchers. The contents of the vouchers 16d to 16g are self explanatory and represent some of the possible voucher formats and types of caches and instructions contained in vouchers granted by the OCS in accordance with the present invention.

## Claims

1. A method of charging end users for the use of a communications network wherein service flows between an end user and the network are transported via a gateway (8, 10), the method comprising the steps of:
at the gateway, identifying different service flows and notifying them to a credit control function (12) of the network;
at the credit control function, granting a cache of units corresponding to an amount of an end user's credit and/or an amount of network resource to the gateway for identified service flows;
at the credit control function, issuing instructions to the gateway to enable the gateway to perform a cache sharing procedure for identified service flows; and
at the gateway, performing the cache sharing procedure for the identified service flows.

2. A method according to claim 1 wherein the gateway decides independently to perform the cache sharing procedure.

3. A method according to claim 1 wherein the gateway performs the cache sharing procedure in response to instructions from the credit control function.

4. A method according to any one of claims 1 to 3 wherein the instructions include policy defining the circumstances in which the cache sharing procedure should be implemented by the gateway.

5. A method according to any one of claims 1 to 4 wherein the instructions include information needed by the gateway for it to perform the cache sharing procedure.

6. A method according to claim 5 wherein the instructions include a conversion factor that may be needed to share or transfer units of the cache between different service flows.

7. A method according to any one of the preceding claims wherein the instructions for an identified service flow specify a measure of network resource and an operator, and the method comprises the steps, at the gateway, of:
counting the measure of network resource used by the service flow; and
applying the operator to the counted amount of resource to calculate an amount of units of a cache consumed by the identified service flow.

8. A method according to any one of the preceding claims wherein the instructions for an identified service flow reference a charging pool (001 - 004), and the method additional comprises the step of:
at the gateway and in response to a trigger, identifying the service flows having instructions referencing the same charging pool and
performing the cache sharing procedure for the identified service flows.

9. A method according to claim 8, wherein the trigger occurs when a request from the gateway to the credit control function for a cache is denied for a service flow having instructions relating to that charging pool.

10. A method according to any one of the preceding claims wherein the cache sharing procedure comprises the steps of:
pooling units of caches for service flows identified in the instructions; and
decrementing the resulting charging pool.

11. A method according to any one of the preceding claims wherein the cache sharing procedure comprises the steps of:
redistributing units between caches associated with service flows identified in the instructions.

12. A method according to any one of the preceding claims wherein the instructions relating to a service flow are issued as a rate plan (14 - 18) per identified service flow.

13. A method according to claim 12, when dependent on claim 7 comprising the additional steps of:
at the credit control function, granting the cache in a credit voucher (20, 22) to the gateway, and referencing the credit voucher in at least two rate plans; and
at the gateway, deducting the calculated amount of units for the rate plans from the cache of the credit voucher referenced by the rate plans.

14. A method according to any one of the preceding claims wherein the credit control function grants the cache and issues the instructions for a particular service flow simultaneously.

15. A method according to any one of claims 1 to 11 wherein the cache and the instructions for a particular service flow are granted in a charging voucher (14', 14" - 18', 18") for the service flow.

16. A method according to claim 15 wherein in a first operational phase, the method comprises the steps of:
at the gateway, decrementing the cache in a charging voucher for a service flow by applying basic instructions in the charging voucher to that service flow;
and in a second operational phase, the method comprises the steps of:
at the gateway, performing the cache sharing procedure on a plurality of charging vouchers identified by the instructions.

17. A method according to any one of the preceding claims comprising the step of the gateway decrementing the caches for identified service flows by applying the instructions to the identified service flows.

18. A method according to any one of the preceding claims wherein the gateway, in response to a cache for an identified service flow becoming exhausted, makes a decision to carry out one of the following steps:
requesting a further cache for the identified service flow from the credit control function; or
performing the cache sharing procedure for identified service flows.

19. A method of charging end users for the use of a communications network in which service flows between an end user and the network are transported via a gateway (8, 10) which gateway identifies the service flows and notifies them to a credit control function (12) of the communications network, wherein the method comprises the steps of:
at the credit control function (12):
granting the gateway a credit voucher (20, 22) containing a cache of units representing an amount of an end user's credit and/or an amount of network resource; and
issuing the gateway with a rate plan (14 - 18) containing instructions which identify a service flow, specify a measure of network resource, specify an operator and
reference a credit voucher; and
at the gateway, counting the measure of network resource specified in the rate plan and used in the service flow identified in the rate plan, applying the operator specified in the rate plan to the counted amount of network resource to calculate an amount of units and deducting the amount of units from the cache of the credit voucher referenced in the rate plan.

20. A method according to claim 19 wherein the same credit voucher (20) is specified in at least two of the rate plans.

21. A method according to claim 19 or claim 20 wherein the rate plan specifies a measure of network resource and an associated operator to be applied to that network resource and a measure of network resource and an associated limit to be applied that network resource.

22. A method of charging end users for the use of a communications network in which service flows between an end user and the network are transported via a gateway (8, 10) which gateway identifies the service flows and notifies them to a credit control function (12) of the communications network, the method comprising the steps of:
at the credit control function, granting the gateway a plurality of charging vouchers (14', 14" - 18', 18"), each charging voucher containing a cache of units representing an amount of an end user's credit and/or an amount of network resource and issuing instructions identifying a service flow and specifying how the cache is to be decremented by the gateway based on the operation of the service flow; and
at the gateway decrementing the cache in each charging voucher based on the operation of the service flow identified in the charging voucher in accordance with the instructions in the charging voucher;
wherein the charging vouchers additionally include a reference to a charging pool, and the method comprises the additional step of:
at the gateway, and in response to a trigger, identifying the charging vouchers referencing the same charging pool and performing a cache sharing procedure on the identified charging vouchers.

23. A method according to claim 22, wherein the trigger occurs when a request from the gateway to the credit control function for a cache is denied for a service flow having a charging voucher referencing that charging pool.

24. A method according to claim 22 or claim 23 wherein the cache sharing procedure comprises the steps of:
pooling units from the caches for identified charging vouchers in a charging pool; and
decrementing amounts of units from the charging pool based on the operation of the service flows associated with the identified charging voucher and in accordance with instructions in the charging vouchers.

25. A method according to claim 22 or 23 wherein the cache sharing procedure comprises the steps of:
redistributing units between the caches of identified charging vouchers.

26. A method of charging end users for the use of a communications network in which service flows between an end user and the network are transported via a gateway (8, 10) which gateway identifies the service flows and notifies them to a credit control function (12) of the communications network, the method comprising the steps of:
at the credit control function, issuing the gateway with a plurality of charging vouchers (14", 18"), each charging voucher containing a cache of units representing an amount of an end user's credit and/or an amount of network resource and containing instructions identifying a service flow and specifying how the cache is to be decremented by the gateway based on the operation of the service flow; and
at the gateway decrementing the cache in each charging voucher based on the operation of the service flow identified in the charging voucher in accordance with the instructions in the charging voucher;
wherein the charging vouchers additionally include a reference to a charging pool, and the method comprises the additional step of:
at the gateway, and in response to a trigger, identifying the charging vouchers referencing the same charging pool and sending them back to the credit control function to be re-issued.

27. A method according to claim 26 wherein the trigger occurs when a request from the gateway to the credit control function for a cache is denied for a service flow having a charging voucher referencing that charging pool.

28. A method according to any one of the preceding claims in which the end user uses an end user equipment (2) connected to an access network (4) to communicate over the communications network (6) via the service flows and the gateway interfaces the access network and the main network.

29. A method according to claim 28 wherein the communications network is an Internet Protocol (IP) network, the access network is a General Packet Radio Service (GPRS) network and the gateway is a Gateway GPRS Support Node (GGSN).

30. A method of charging end users for the use of a communications network wherein service flows between an end user and the network are transported via a gateway (8, 10) which identifies different service flows and notifies them to a credit control function (12) of the network, wherein:
the credit control function carries out the steps of:
issuing instructions (14 - 18) to the gateway for identified service flows to enable the gateway to calculate a charging rate to apply to the identified service flows,
and the gateway carries out the steps of:
performing the charging rate calculation to determine the charging rate; and
applying the charging rate to the identified service flows.

31. A communications network wherein service flows between an end user and the network are transported via a gateway (8, 10) which identifies different service flows and notifies them to a credit control function (12) of the network in response to which the credit control function grants a cache of units representing an amount of an end user's credit and/or an amount of network resource to the gateway for identified service flows, wherein the credit control function, issues instructions (14 - 18) to the gateway to enable the gateway to perform a cache sharing procedure for identified service flows.

32. A network according to claim 31 wherein the gateway decides independently to perform the cache sharing procedure.

33. A network according to claim 31 wherein the gateway performs the cache sharing procedure in response to instructions from the credit control function.

34. A network according to any one of claims 31 to 33 wherein the instructions include policy defining the circumstances in which the cache sharing procedure should be implemented by the gateway.

35. A network according to any one of claims 1 to 4 wherein the instructions include information needed by the gateway for it to perform the cache sharing procedure.

36. A network according to claim 35 wherein the instructions include a conversion factor that may be needed to share or transfer units of the cache between different service flows.

37. A network according to any one of claims 31 to 36 wherein the instructions for an identified service flow specify a measure of network resource of the identified service flow to be counted by the gateway and an operator for the gateway to apply to the counted amount of resource to calculate an amount of units of a cache consumed by the identified service flow.

38. A network according to any one of claims 31 to 37 wherein the instructions for an identified service flow reference a charging pool (001 - 004) and the gateway, in response to a trigger, performs the cache sharing procedure for those service flows associated with the same charging pool.

39. A network according to any one of claims 31 to 38 wherein the cache sharing procedure includes pooling of units from caches for service flows identified in the instructions and decrementing the resulting charging pool.

40. A network according to any one of claims 31 to 38 wherein the cache sharing procedure includes redistributing units between caches associated with service flows identified in the instructions.

41. A network according to any one of claims 31 to 40 wherein the credit control function grants the cache and issues the instructions for a particular service flow simultaneously.

42. A network according to any one of claims 31 to 41 wherein the gateway, in response to a cache for identified service flows becoming exhausted, makes a decision either to request a further cache for the identified service flows from the credit control function or to perform the cache sharing procedure for the identified service flows.

43. A gateway (8, 10) for transporting service flows between an end user and a communications network which identifies different service flows and notifies them to a credit control function (12) of the network and which in response receives from the credit control function a cache of units representing an amount of an end user's credit and/or an amount of network resource and instructions (14 - 18) for identified service flows, wherein the gateway performs a cache sharing procedure for the identified service flows based on the instructions.

44. A gateway according to claim 43 wherein the instructions for an identified service flow specify a measure of network resource of the identified service flow to be counted by the gateway and an operator for the gateway to apply to the counted amount of resource to calculate an amount of units of a cache consumed by the identified service flow.

45. A gateway according to claim 43 or claim 44 wherein the instructions for an identified service flow reference a charging pool (001 - 004) and the gateway, in response to a trigger, performs the cache sharing procedure for the service flows having instructions identifying the same charging pool.

46. A gateway according to any one of claims 43 to 45 wherein the cache sharing procedure includes pooling of units of caches for service flows identified in the instructions and decrementing the resulting charging pool.

47. A gateway according to any one of claims 43 to 45 wherein the cache sharing procedure includes redistributing units between caches of service flows identified in the instructions.

48. A gateway according to any one of claims 43 to 47 which, in response to a cache of an identified service flow becoming exhausted, makes a decision either to request a further cache for the identified service flow from a credit control function or to perform the cache sharing procedure for identified service flows.

49. A credit control function (12) for a communications network in which service flows between an end user and the network are transported via a gateway (8, 10) which gateway identifies different service flows and notifies them to the credit control function wherein the credit control function issues to a gateway for identified service flows transported via that gateway a cache of units representing an amount of an end user's credit and/or an amount of network resource and instructions (14 - 18) to enable the gateway to perform a cache sharing procedure for identified service flows.

50. A credit control function according to claim 49 wherein the credit control function issues the cache and the instructions for a particular service flow simultaneously.

51. A credit control function according to claim 49 or claim 50 wherein the instructions for an identified service flow specify a measure of network resource of the identified service flow to be counted by the gateway and an operator for the gateway to apply to the counted amount of resource to calculate an amount of units of a cache consumed by the identified service flow.

52. A credit control function according to any one of claims 49 to 51 wherein the instructions for an identified service flow reference a charging pool (001 - 004) so that the gateway can perform the cache sharing procedure for the service flows associated with the same charging pool.

53. A communications network in which service flows between the end user equipment and the network are transported via a gateway (8, 10) which gateway identifies the service flows and notifies them to a credit control function (12) of the communications network, wherein the credit control function issues the gateway with:
a credit voucher (20, 22) containing a cache of units representing an amount of credit and/or an amount of network resource; and
a rate plan (14 - 18) containing instructions which identify a service flow, specify a measure of network resource, specify an operator and reference a credit voucher; and
the gateway counts the measure of network resource specified in the rate plan and used in the service flow identified in the rate plan, applies the operator specified in the rate plan to the counted amount of network resource to calculate an amount of units and deducts the amount of units from the cache of the credit voucher referenced in the rate plan.

54. A communications network according to claim 53 wherein the same credit voucher (20) is specified in at least two of the rate plans.

55. A communications network in which service flows between an end user and the network are transported via a gateway (8, 10) which gateway identifies the service flows and notifies them to a credit control function (12) of the communications network, wherein the credit control function, issues the gateway with a plurality of charging vouchers (14', 14" - 18', 18"), each charging voucher containing a cache of units representing an amount of an end user's credit and/or an amount of network resource and instructions identifying a service flow and specifying how the cache is to be decremented by the gateway based on the operation of the service flow, wherein the charging vouchers additionally include a reference to a charging pool, and the gateway in response to a trigger identifies the charging vouchers referencing the same charging pool and performs a cache sharing procedure on the identified charging vouchers.

56. A communications network in which service flows between an end user and the network are transported via a gateway (8, 10) which gateway identifies the service flows and notifies them to a credit control function (12) of the communications network, wherein the credit control function, issues the gateway with a plurality of charging vouchers (14" - 18"), each charging voucher containing a cache of units representing an amount of an end user's credit and/or an amount of network resource and instructions identifying a service flow and specifying how the cache is to be decremented by the gateway based on the operation of the service flow, wherein the charging vouchers additionally include a reference to a charging pool, and the gateway in response to a trigger, identifies the charging vouchers referencing the same charging pool and sends them back to the credit control function to be re-issued.

57. A communications network wherein service flows between an end user and the network are transported via a gateway (8, 10) which identifies different service flows and notifies them to a credit control function of the network, wherein:
the credit control function comprises means for issuing instructions (14 - 18) to the gateway for identified service flows to enable the gateway to calculate a charging rate to apply to the identified service flows,
and the gateway comprises means for performing the charging rate calculation to determine the charging rate and for applying the charging rate to the identified service flows.

58. A communications network according to any one of claims 31 to 41 or 53 to 57 in which the end user uses an end user equipment (2) connected to an access network (4) to communicate over the communications network (6) via the service flows and the gateway interfaces the access network and the main network.

59. A communications network according to claim 58 wherein the communications network is an Internet Protocol (IP) network, the access network is a General Packet Radio Service (GPRS) network and the gateway is a Gateway GPRS Support Node (GGSN).

60. A credit control function (12) for a communications network in which service flows between an end user and the network are transported via a gateway (8, 10) which gateway identifies different service flows and notifies them to the credit control function wherein the credit control function issues to a gateway for service flows transported via that gateway instructions which identify a service flow, specify a measure of network resource and specify an operator to be applied to that network resource of that service flow.

61. A credit control function according to claim 60 wherein the instructions additionally specify a measure of network resource and an associated limit to be applied that network resource.

62. A method of charging end users for the use of a communications network wherein service flows between an end user and the network are transported via a gateway (8, 10), the method comprising the steps of:
the gateway, requesting a voucher from a credit control function (12) of the network for a service flow of an end user;
the credit control function, in the event that the end user has insufficient credit, identifying other issued vouchers drawn from the end user's account, revoking the identified vouchers, and re-sharing credit between the revoked vouchers and the requested voucher.

63. A credit control function (12) for a communications network in which service flows between an end user and the network are transported via a gateway (8, 10) which gateway identifies service flows wherein in response to a request for a voucher from the gateway for a service flow of an end user, the credit control function, in the event that the end user has insufficient credit, identifies other issued vouchers drawn from the end user's account, revokes the identified vouchers, and re-shares credit between the revoked vouchers and the requested voucher.
